# EUROPEAN PATENT APPLICATION

(11) **EP 4 324 788 A1**
(43) Date of publication of application: **21.02.2024**
(21) Application number: 22788410.3
(22) Date of filing: 12.04.2022
(51) Int. Cl.: C01B 21/086, H01M 10/0568

(54) **LITHIUM SALT OF BISFLUOROSULFONYLIMIDE COMPRISING CESIUM ION OR RUBIDIUM ION**

(30) Priority: 12.04.2021 KR 20210047395
(71) Applicant: EP CHEMTECH CO., LTD., Chungcheongbuk-do 27651 (KR)
(72) Inventor: LEE, Soon Ho, Gunsan-si Jeollabuk-do 54082 (KR)
(74) Representative: Patentanwaltskanzlei Matschnig & Forsthuber OG
(86) International application number: PCT/KR2022/005302
(87) International publication number: WO 2022/220554

(57) **Abstract**

The present invention relates to an electrolyte additive composition comprising lithium salt of bisfluorosulfonylimide and at least one selected from the group consisting of Cs⁺ ion and Rb ion⁺.

## Description

### Field of Invention

The present invention relates to a bisfluorosulfonylimide lithium salt used in a lithium secondary electrolyte.

### Background of Invention

Recently, as the demand of the secondary battery industry relevant to medium and large products increases, the importance of battery output and safety is continuously emerging. Further, there is no choice but to increase the interest in battery life. The stability and lifespan of a battery are affected by SEI (solid electrolyte interphase) film, although also being affected by other factors.

The SEI film formed on a negative electrode act as an ion tunnel, which passes only lithium ions therethrough. According to effects of the ion tunnel, the SEI membrane prevents a structure of the negative electrode from being destroyed since an organic solvent molecule having a large molecular weight, which moves along with lithium ions in an electrolyte, is intercalated between the layers of a negative electrode active material. Therefore, the electrolyte is not decomposed by preventing the contact between the electrolyte and the negative electrode active material, and an amount of lithium ions in the electrolyte is reversibly maintained to continue stable charging and discharging.

LiFSI (lithium salt of bisfluorosulfonylimide) as one component of the electrolyte forms an effective SEI (solid electrolyte interphase) film on the electrode surface, therefore, LiFSI has great advantages in terms of functions to overcome problems of the existing lithium salt such as lifespan, output and stability, and to enhance the performance thereof.

### Summary of Invention

### Technical Problem to be Solved

However, the conventional LiFSI has limitations in improving electrical properties such as the formation of SEI film, lifespan, and output. For this reason, a separate additive for improvement of SEI film has to be used in the electrolyte, which complicates the process and increases the cost of the electrolyte.

An object of the present invention is to provide an improved LiFSI salt that can help to form a thin and stable SEI film on the surface of a positive electrode or a negative electrode of a lithium battery.

### Technical Solution

In order to achieve the above object, the present invention provides a bisfluorosulfonylimide lithium salt including one or more selected from the group consisting of Cs⁺ ions and Rb⁺ ions.

Further, the present invention provides a composition for an electrolyte additive, which includes one or more selected from the group consisting of Cs⁺ ions and Rb⁺ ions as well as a bisfluorosulfonylimide lithium salt.

### Effect of Invention

The bisfluorosulfonylimide lithium salt (LiFSI) or LiFSI-containing composition prepared according to an embodiment of the present invention includes a function of forming a thin and stable SEI film on the positive and negative electrodes of a lithium battery when added to an electrolyte solution, and as a result, it has effects of improving high and low temperature output of the lithium battery and increasing battery life and stability.

### Brief Description of Drawings

FIG. 1 illustrates an output evaluation result of a battery including LiFSI, which contains 5,000 ppm by weight of cesium ions.
FIG. 2 illustrates an output evaluation result of a battery including LiFSI, which contains 6,000 ppm by weight of rubidium ions.

### Best Mode for Carrying out Invention

Hereinafter, the present invention will be described in detail. The terms or words used in the present specification and claims are not to be construed as being limited to their ordinary or dictionary meanings, instead, on the basis of the principle that the inventor may appropriately define the concepts of the terms in order to best describe his invention by the best method, it should be interpreted as meanings and concepts consistent with the technical idea of the present invention.

The present inventors recognized the possibility of forming a thinner and more stable SEI film than that formed using conventional LiFSI, and tried to solve the problem. Therefore, it was confirmed that, when LiFSI including Cs⁺ ions and/or Rb⁺ ions, or a composition including Cs⁺ and/or Rb⁺ ions as well as LiFSI is used, a thinner and more stable SEI (solid electrolyte interphase) film can be formed on the surface of the positive or negative electrode of a lithium battery to improve battery life and output, thereby completing the present invention.

The present invention provides LiFSI including Cs⁺ ions and/or Rb⁺ ions, which is used as a lithium battery electrolyte additive, or a composition for an electrolyte additive, which includes Cs⁺ and/or Rb⁺ ions as well as LiFSI.

In the inventive LiFSI including Cs⁺ ions and/or Rb⁺ ions, or the composition including Cs⁺ ions and/or Rb⁺ ions as well as LiFSI, the Cs⁺ ions and/or Rb⁺ ions may be included in an amount of more than 0 to 100,000 ppm by weight ("wt. ppm") or less, more preferably, 5 to 10,000 wt. ppm. When LiFSI including Cs⁺ ions and/or Rb⁺ ions in the above content are used as an electrolyte additive, a more stable SEI film may be formed in the battery.

The LiFSI or LiFSI-containing composition including Cs⁺ ions and/or Rb⁺ ions of the present invention is not limited thereto, but may be prepared by a method of Scheme 1 below. That is, the LiFSI containing Cs⁺ ions and/or Rb⁺ ions of the present invention may be prepared by adding a cesium salt or a rubidium salt when the compound of Formula 1 and a lithium salt are ion-exchanged in a solvent.

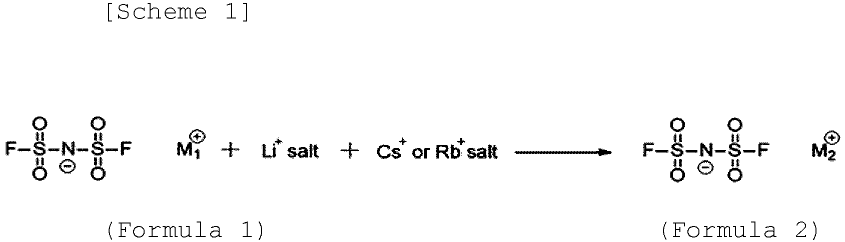

In Formula 1, M₁⁺ is H, Na, K, Ca, Zn, Cs, Rb, or an onium ion including N or S, and the ion additive is a cesium salt or a rubidium salt.

In Formula 2, M₂⁺ is a Li ion and one or more ions selected from Cs and Rb.

With regard to LiFSI containing cesium and/or rubidium ions of the present invention, when LiFSI is prepared by reacting bisfluorosulfonylimide or a salt of bisfluorosulfonyl (except lithium salt) with a lithium salt and then conducting cation substitution, LiFSI finally including cesium ions and/or rubidium ions may be prepared if adding a cesium salt and/or rubidium salt as a separate additive.

When the cesium and/or rubidium ion-containing LiFSI or LiFSI-including composition may be produced by adding a cesium salt and/or a rubidium salt to a LiFSI solution including a solvent and then stirring the same, wherein one or more selected from the group consisting of Cs⁺ ions and Rb⁺ ions is included.

The onium ion including N or S is preferably an NH ₄⁺ ion.

The lithium salt may be lithium hydroxide (LiOH), a hydrate thereof (LiOH·H₂O), Li₂CO₃, LiNH₂, LiHCO₃, BuLi, LiF, LiCl, LiBr, LiI, or LiClO₄. The lithium salt is preferably lithium hydroxide that is commercially useful and has high stability.

The cesium salt may be CsF, CsCl, CsBr, CsI, CsCN, CsClO₄, CsH, CsNO₃, CsOH, Cs₂CO₃, CsHCO₃, Cs₂SO₄, Cs₂S, CsC₂H₃O₂, Cs₂O or CsHSO₄. The cesium salt is preferably cesium hydroxide that is commercially available and has high stability.

The rubidium salt may be RbF, RbCl, RbBr, RbI, RbCN, RbClO₄, RbH, RbNO₃, RbOH, Rb₂CO₃, RbHCO₃, Rb₂SO₄, Rb₂S, RbC₂H₃O₂, Rb₂O or RbHSO₄. The rubidium salt is preferably rubidium hydroxide that is commercially useful and has high stability.

The ion exchange reaction or the cesium salt and/or rubidium salt addition reaction may be performed in a solvent capable of dissolving LiFSI.

The solvent may be, for example: water; alcohols such as methanol, ethanol, propanol, butanol and isopropyl alcohol; hydrocarbons such as pentane, hexane, heptane and cyclohexane; aromatic hydrocarbons such as benzene and toluene; acetone; acetates such as methyl acetate, ethyl acetate, and butyl acetate; methylene chloride; chloroform; ethers such as diisopropyl ether, methyl-t-butyl ether, and 1,2-dimethoxyethane; at least one cyclic carbonates selected from the group consisting of ethylene carbonate, 1,2-butylene carbonate, 2,3-butylene carbonate, 1,2-pentylene carbonate, 2,3-pentylene carbonate, vinylene carbonate and fluoroethylene carbonate (FEC); acetonitrile; linear carbonates such as dimethyl carbonate, diethyl carbonate, dipropyl carbonate, ethylmethyl carbonate, methylpropyl carbonate, and ethylpropyl carbonate; and glycols such as ethylene glycol, propylene glycol and butylene glycol, and these may be used alone or in combination of two or more thereof.

The reaction solvent is preferably 1,2-dimethoxyethane, butyl acetate, acetonitrile, water, or a mixture thereof.

The solvent may be used in an amount of 10 to 50 mL, preferably, 15 to 40 mL per 1 g of M₁FSI or M₂FSI. When the solvent is used in the above content, the reaction may proceed by sufficiently dissolving the reactants.

In an exemplary embodiment of the present invention, the lithium salt may be 0.5 equivalent or more and 2 equivalents or less, preferably, 1 equivalent or more and 1.5 equivalents or less based on the reaction equivalent ratio of the bisfluorosulfonylimide salt.

When the lithium salt is included in the above equivalent range, a yield can be increased in a purification process to be carried out later and, after the reaction is completed, no residue is left, thereby achieving excellent effects of increasing the purity.

The cesium salt or rubidium salt added to the ion exchange reaction or LiFSI may be added so that Cs+ ions and/or Rb+ ions can be included in the final LiFSI salt or LiFSI-containing composition in the range of more than 0 to 100,000 wt. ppm

In an exemplary embodiment of the present invention, a filtration or purification step may be further included in order to remove unreacted substances, side reactants, and other foreign substances generated in the step of reacting the bisfluorosulfonylimide salt with the lithium salt.

For the purification of LiFSI, an aqueous solution of cesium hydroxide, etc. may be used, and in this case, acid by-products possibly causing a change in LiFSI over time may be removed.

In one embodiment of the present invention, a reaction temperature may be -50 to 100 °C, preferably -20 to 50 °C, more preferably -10 to 30 °C or less.

When the reaction temperature is in the above range, suppression of by-products can be prevented and color change of the product can be prevented. Further, in the step of concentrating the filtrate to form a concentrate, it may be easily crystallized without using any expensive equipment, that is, a thin-film evaporator, and this may be an advantage according to an exemplary embodiment of the present invention.

### Mode for Carrying out Preferred Embodiment of Invention

Hereinafter, the present invention will be described in detail with reference to preferred embodiments of the present invention, but the present invention is not limited thereto.

### <Example 1-1: Preparation method of LiFSI containing Cs⁺ ions in a mixed solvent>

10 g (0.05 mole) of NH₄FSI, 20 ml of butyl acetate, and 10 ml of distilled water were added to a reactor, completely dissolved, and then cooled to 0 °C. After adding 0.05 g of cesium hydroxide monohydrate to the cooled reactor while stirring at room temperature for 30 minutes, 2.75 g (0.066 mole) of lithium hydroxide monohydrate was added and reacted at room temperature for 1 hour. After the reaction was completed, an organic layer was separated and recovered. After that, 30 ml of butyl acetate was added again to an aqueous layer and the reaction was repeated twice. The obtained organic layer was concentrated under reduced pressure at 50 °C to yield 6.14 g (0.033 mole) of LiFSI crystals (LiFSI purity 99%, cesium ion 5,000 wt. ppm, yield 65%).

### <Example 1-2: Preparation method of LiFSI containing Cs⁺ ions in a mixed solvent>

A desired product was prepared in the same manner as in Example 1-1, except that cesium hydroxide monohydrate used in Example 1-1 was used in an amount of 0.03 g. As a result, 5.95 g of LiFSI crystals were obtained as a white solid (LiFSI purity 99%, cesium ion 3,000 wt. ppm, yield 63%) .

### <Example 1-3: Preparation method of LiFSI containing Cs⁺ ions in a mixed solvent>

A desired product was prepared in the same manner as in Example 1-1, except that cesium hydroxide monohydrate used in Example 1-1 was used in an amount of 0.01 g. As a result, 6.23 g of LiFSI crystals were obtained as a white solid (LiFSI purity 99%, cesium ion 1,000 wt. ppm, yield 66%)

### <Example 2-1: Preparation method of LiFSI containing Cs⁺ ions in an aqueous solution>

10 g (0.05 mole) of NH₄FSI and 20 ml of distilled water were added to a reactor at room temperature, completely dissolved, and then 0.05 g of cesium hydroxide monohydrate was added and stirred for 10 minutes. Then, 2.75 g (0.066 mole) of lithium hydroxide monohydrate was added and the reaction proceeded at room temperature for 1 hour. After the reaction was completed, it was completely concentrated at 40 °C, and then 50 ml of toluene was added, followed by recrystalization. The crystals obtained by filtration were dissolved in 40 ml of 1,2-dimethoxyethane, and then insoluble matter was removed. The filtrate was concentrated under reduced pressure at 50 °C to yield 8.5 g (0.045 moles) of LiFSI crystals (LiFSI purity 99%, cesium ion 5,000 wt. ppm, yield 90%).

### <Example 2-2: Preparation method of LiFSI containing Cs⁺ ions in an aqueous solution>

A desired product was prepared in the same manner as in Example 2-1, except that cesium hydroxide monohydrate used in Example 2-1 was used in an amount of 0.03 g. 8.12 g of LiFSI crystals were obtained as a white solid (LiFSI purity 99%, cesium ion 3,000 wt. ppm, yield 86%).

### <Example 2-3: Preparation method of LiFSI containing Cs⁺ ions in an aqueous solution>

A desired product was prepared in the same manner as in Example 2-1, except that cesium hydroxide monohydrate used in Example 2-1 was used in an amount of 0.01 g. 8.40 g of LiFSI crystals were obtained as a white solid (LiFSI purity 99%, cesium ion 1,000 wt. ppm, yield 89%).

### <Example 3-1: Preparation method of LiFSI containing Cs⁺ ions in an organic solvent>

10 g (0.05 mole) of NH₄FSI, 20 ml of acetonitrile and 0.05 g of cesium hydroxide monohydrate were added to a reactor at room temperature and stirred for 1 hour. Then, 2.75 g (0.066 mole) of lithium hydroxide monohydrate was added and the reaction proceeded at room temperature for 3 hours. After the reaction was completed, it was filtered to remove insoluble matter, and the filtrate was concentrated under reduced pressure at 50 °C to yield 9.16 g (0.049 moles) of LiFSI crystals (LiFSI purity 99%, cesium ion 5,000 wt. ppm, yield 97%) .

### <Example 3-2: Preparation method of LiFSI containing Cs⁺ ions in an organic solvent>

A desired product was prepared in the same manner as in Example 3-1, except that cesium hydroxide monohydrate used in Example 3-1 was used in an amount of 0.03 g. 8.97 g of LiFSI crystals were obtained as a white solid. (LiFSI purity 99%, cesium ion 3,000 wt. ppm, yield 95%).

### <Example 3-3: Preparation method of LiFSI containing Cs+ ions in an organic solvent>

A desired product was prepared in the same manner as in Example 3-1, except that cesium hydroxide monohydrate used in Example 3-1 was used in an amount of 0.01 g. 9.25 g of LiFSI crystals were obtained as a white solid. (LiFSI purity 99%, cesium ion 1,000 wt. ppm, yield 98%).

### <Example 4-1: Preparation of LiFSI containing Cs⁺ ions by adding cesium salt to a LiFSI-containing solution>

After dissolving 10 g (0.053 mole) of LiFSI in 20 ml of 1,2-dimethoxyethane in a reactor, 0.05 g of cesium hydroxide monohydrate was added thereto and stirred at 40 °C for 24 hours. When the reaction was completed, the remaining insoluble matter was completely removed by filtration. Then, the filtrate was concentrated under reduced pressure at 50 °C, and recrystalization proceeded by adding 30 ml of toluene. The obtained crystals were completely dried with the residual solvent at 50 °C to yield 9.35 g (0.050 moles) of LiFSI crystals (LiFSI purity 99%, cesium ion 5,000 wt. ppm, yield 99%).

### <Example 4-2: Preparation of LiFSI containing Cs⁺ ions by adding cesium salt to a LiFSI-containing solution>

A desired product was prepared in the same manner as in Example 4-1, except that cesium hydroxide monohydrate used in Example 4-1 was used in an amount of 0.03 g. 9.35 g of LiFSI crystals were obtained as a white solid (LiFSI purity 99%, cesium ion 3,000 wt. ppm, yield 99%).

### <Example 4-3: Preparation of LiFSI containing Cs⁺ ions by adding cesium salt to a LiFSI-containing solution>

A desired product was prepared in the same manner as in Example 4-1, except that cesium hydroxide monohydrate used in Example 4-1 was used in an amount of 0.01 g. 9.35 g of LiFSI crystals were obtained as a white solid (LiFSI purity 99%, cesium ion 1,000 wt. ppm, yield 99%).

### <Examples 5 to 8: Preparation of LiFSI containing Rb⁺ Ions>

LiFSI including Rb⁺ ions was prepared in the same manner as in Examples 1 to 4 using the reactants and solvents in Table 1 below, and the obtained LiFSI content is shown in Table 1 below.

**[TABLE 1]**

| | Example 5 | Example 6 | Example 7 | Example 8 |
|---|---|---|---|---|
| NH₄FSI | 10 g (0.05 mole) | 10 g (0.05 mole) | 10 g (0.05 mole) | - |
| LiFSI | - | - | - | 10 g (0.053 mole) |
| RbOH·H₂O | 0.06 g | 0.06 g | 0.06 g | 0.06 g |
| LiOH·H₂O | 2.75 g | 2.75 g | 2.75 g | - |
| Medium | Butyl acetate 20 mL distilled water 10 mL | distilled water 20 mL | Acetonitril e 20 mL | 1,2-dimethoxyet hane 20 ml |
| LiFSI content (yield) | 5.66 g (yield 60%) | 8.50 g (yield 90%) | 9.25 g (yield 98%) | 9.35 g (yield 99%) |
| Rb ion content | 6,000 wt. ppm | 6,000 wt. ppm | 6,000 wt. ppm | 6,000 wt. ppm |

### <Experimental Example 1>

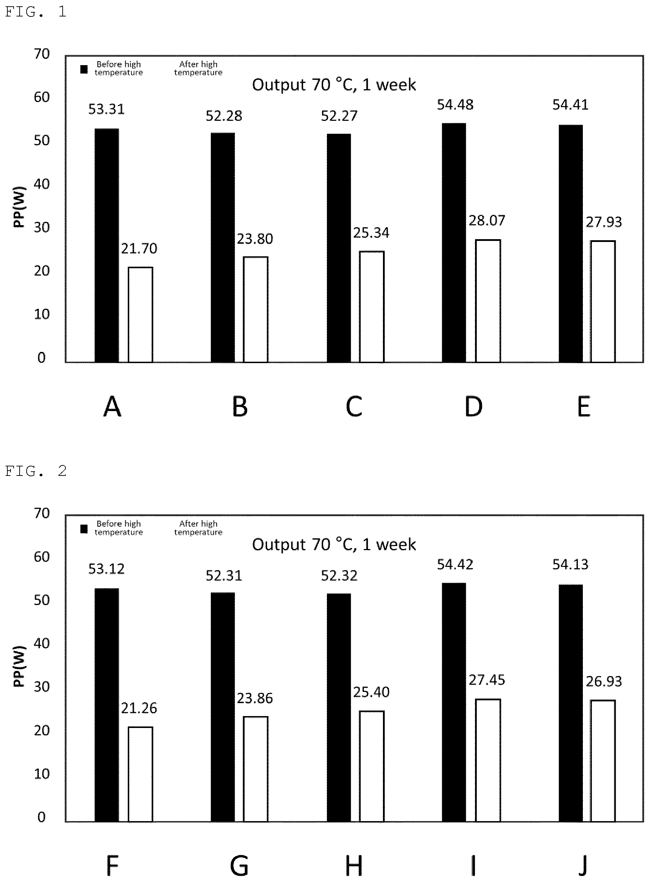

The battery used for battery evaluation was a pouch cell, and NCM811 was used as a positive electrode while graphite was used as a negative electrode. Further, a mixed solvent of ethylene carbonate, ethylmethyl carbonate and dimethyl carbonate was used as the electrolyte solvent. The electrolyte was prepared using an electrolyte solution containing 1.15M LiPF₆ electrolyte, as well as VC (Vinylene Carbonate) and LiFSI as additives in the weight ratio of Table 2 below. For the manufactured battery, a battery output was evaluated, and then the battery output was also evaluated after exposure to a high temperature (70 °C) for 1 week. The evaluation results are shown in FIG. 1

**[TABLE 2]**

| Battery | Electrolyte | Additive | |
|---|---|---|---|
| A | 1.15M LiPF₆ | NO add | |
| B | 1.15M LiPF₆ | VC 1 wt.% | - |
| C | 1.15M LiPF₆ | VC 1 wt.% | 0.5 wt.% LiFSI |
| D | 1.15M LiPF₆ | VC 1 wt.% | 0.5 wt.% LiFSI containing 0.5 wt.% cesium ion |
| E | 1.15M LiPF₆ | VC 1 wt.% | 0.1 wt.% LiFSI containing 0.5 wt% cesium ion |

According to FIG. 1, in the case of the battery A to which VC and LiFSI were not added, the battery output before high temperature exposure was 53.31 whereas, after high temperature exposure, the battery output was 21.7, which decreased to less than 50% compared to before high temperature exposure. On the other hand, battery D, to which VC and LiFSI containing cesium ions were added, had a higher battery output of 54.48 compared to battery A before high temperature exposure. Further, although the output decreased after high temperature exposure, it was maintained to 51.5% compared to before exposure. In addition, it could be seen that battery D has higher battery output in both cases of before and after high temperature exposure compared to battery C, to which LiFSI not containing cesium was added together with VC.

### <Experimental Example 2>

A battery was manufactured as in Experimental Example 1 using an electrolyte containing 1.15M LiPF₆ electrolyte, as well as VC (Vinylene Carbonate) and LiFSI as additives in the weight ratio of Table 3 below, and was exposed at high temperature (70 °C) for 1 week. The manufactured battery was subjected to battery output evaluation before and after exposure. The results are shown in FIG. 2.

**[TABLE 3]**

| Battery | Electrolyte | Additive | |
|---|---|---|---|
| F | 1.15M LiPF₆ | No add | |
| G | 1.15M LiPF₆ | VC 1 wt.% | - |
| H | 1.15M LiPF₆ | VC 1 wt.% | 0.5 wt.% LiFSI |
| I | 1.15M LiPF₆ | VC 1 wt.% | 0.5 wt.% LiFSI containing 0.6 wt.% rubidium ion |
| J | 1.15M LiPF₆ | VC 1 wt.% | 0.1 wt.% LiFSI containing 0.6 wt.% rubidium ion |

According to FIG. 2, in the case of the battery F to which VC and LiFSI were not added, the battery output before high temperature exposure was 53.12, whereas, after high temperature exposure, the battery output was 21.26, which decreased to less than 50% compared to before high temperature exposure. On the other hand, the battery I to which VC and LiFSI containing rubidium ions were added had a higher battery output of 54.42 than Battery F before high temperature exposure. Further, although the output decreased after high temperature exposure, it was maintained to 50.4% compared to before exposure. Further, it could be seen that battery I has higher battery output in both cases of before and after high temperature exposure compared to battery H, to which LiFSI not containing was added together with VC.

According to the above results, when the LiFSI containing cesium ions or rubidium ions prepared in the present invention is used in the electrolyte, improved results can be obtained in terms of long-term stability and high-temperature output of the battery.

### Industrial Applicability

When the LiFSI containing cesium ions or rubidium ions prepared in the present invention is used in the electrolyte, improved results can be obtained in terms of long-term stability and high-temperature output of the battery.

## Claims

1. A bisfluorosulfonylimide lithium salt, comprising one or more selected from the group consisting of Cs⁺ ion and Rb⁺ ion.

2. The lithium salt according to claim 1, wherein the one or more selected from the group consisting of Cs⁺ ion and Rb⁺ ion is included in an amount of more than 0 to 100,000 ppm per weight C"wt. ppm") or less.

3. A composition for an electrolyte additive, comprising a bisfluorosulfonylimide lithium salt as well as one or more selected from the group consisting of Cs⁺ ion and Rb⁺ ion.

4. The composition according to claim 3, wherein the one or more selected from the group consisting of Cs⁺ ion and Rb⁺ ion is included in an amount of more than 0 to 100,000 wt. ppm or less.

5. A method for preparation of a bisfluorosulfonylimide lithium salt which includes one or more selected from the group consisting of Cs⁺ ion and Rb⁺ ion, comprising adding a cesium salt or rubidium salt when a compound represented by Formula 1 below and a lithium salt are subjected to ion exchange reaction in a solvent. 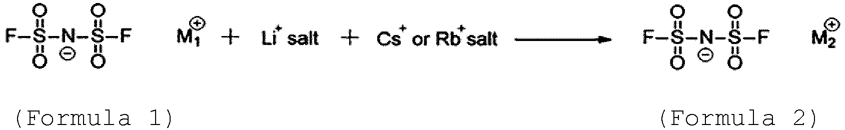
wherein, in Formula 1, M₁⁺ is H, Na, K, Ca, Zn, Cs, Rb, or an onium ion including N or S, and an ion additive is a cesium salt or a rubidium salt, and
wherein, in Formula 2, M₂⁺ is a Li ion and one or more ions selected from Cs and Rb.

6. A method for preparation of a bisfluorosulfonylimide lithium salt which includes one or more selected from the group consisting of Cs⁺ ion and Rb⁺ ion, comprising adding a cesium salt or rubidium salt to a solvent-including LiFSI solution and then stirring the same.

7. The method according to claim 5, wherein the lithium salt is lithium hydroxide (LiOH), lithium hydroxide hydrate (LiOH·H₂O), Li₂CO₃, LiNH₂, LiHCO₃, BuLi, LiF, LiCl, LiBr, LiI, or LiClO₄.

8. The method according to claim 5, wherein the cesium salt is CsF, CsCl, CsBr, CsI, CsCN, CsClO₄, CsH, CsNO₃, CsOH, Cₛ₂CO₃, CsHCO₃, Cs₂SO₄, Cs₂S, CsC₂H₃O₂, Cs₂O or CsHSO₄, and the rubidium salt is RbF, RbCl, RbBr, RbI, RbCN, RbClO₄, RbH, RbNO₃, RbOH, Rb₂CO₃, RbHCO₃, Rb₂SO₄, Rb₂S, RbC₂H₃O₂, Rb₂O or RbHSO₄.

9. The method according to claim 6, wherein the cesium salt is CsF, CsCl, CsBr, CsI, CsCN, CsClO₄, CsH, CsNO₃, CsOH, Cs₂CO₃, CsHCO₃, Cs₂SO₄, Cs₂S, CsC₂H₃O₂, Cs₂O or CsHSO₄, and the rubidium salt is RbF, RbCl, RbBr, RbI, RbCN, RbClO₄, RbH, RbNO₃, RbOH, Rb₂CO₃, RbHCO₃, Rb₂SO₄, Rb₂S, RbC₂H₃O₂, Rb₂O or RbHSO₄.

10. The method according to claim 5, wherein the solvent is one or a combination of two or more selected from the group consisting of: water; alcohols; hydrocarbons; hydrocarbons: acetates; methylene chloride; chloroform; ethers; cyclic carbonates; acetonitrile; linear carbonates; and glycols.

11. The method according to claim 6, wherein the solvent is one or a combination of two or more selected from the group consisting of: water; alcohols; hydrocarbons; hydrocarbons: acetates; methylene chloride; chloroform; ethers; cyclic carbonates; acetonitrile; linear carbonates; and glycols.

12. The method according to claim 5, wherein the reaction temperature ranges from -50 to 100 °C.

13. The method according to claim 6, wherein the reaction temperature ranges from -50 to 100 °C.
